# EUROPÄISCHE PATENTSCHRIFT

(11) **EP 4 051 917 B1**
(45) Veröffentlichungstag und Bekanntmachung des Hinweises auf die Patenterteilung: **24.01.2024**
(21) Anmeldenummer: 20792971.2
(22) Anmeldetag: 14.10.2020
(51) Int. Cl.: F16C 17/03, F16C 33/10, F16C 17/06

(54) **KIPPSEGMENTLAGER UND WARMÖLAUSLEITER FÜR EIN SOLCHES**
TILTING PAD BEARING AND HOT OIL DRAINER THEREFOR
PALIER À PATINS OSCILLANTS ET ÉGOUTTOIR À HUILE CHAUDE POUR CELUI-CI

(30) Priorität: 30.10.2019 DE 102019129381; 27.01.2020 DE 102020101866
(43) Veröffentlichungstag der Anmeldung: 07.09.2022
(73) Patentinhaber: Miba Industrial Bearings Germany Osterode GmbH, 37520 Osterode (DE)
(72) Erfinder: LAABID, Abdelhakim, 37073 Göttingen (DE); HEIN, Andreas, 31180 Giesen (DE); KOCH, Thilo, 37115 Duderstadt (DE)
(74) Vertreter: Gramm, Lins & Partner Patent- und Rechtsanwälte PartGmbB
(86) Internationale Anmeldenummer: PCT/EP2020/078915
(87) Internationale Veröffentlichungsnummer: WO 2021/083668

(56) Entgegenhaltungen:
- DE-A1-102011 105 762
- JP-A- S58 180 815
- JP-A- 2003 113 834
- JP-A- 2010 151 283
- US-A- 5 738 447

## Beschreibung

Die Erfindung betrifft ein Kippsegmentlager zum Lagern einer Welle mit einer Längsachse, wobei das Kippsegmentlager wenigstens zwei voneinander beabstandete Kippsegmente mit jeweils einer Lagerfläche und wenigstens einen Warmölausleiter aufweist, der in einem Zwischenraum zwischen den wenigstens zwei Kippsegmenten angeordnet ist, wobei der wenigstens eine Warmölausleiter in Richtung auf die Welle zu und von der Welle weg bewegbar gelagert ist, wobei das Kippsegmentlager wenigstens ein Kraftaufbringelement aufweist, durch das eine nach radial innen wirkende Kraft auf den wenigstens einen Warmölausleiter ausübbar ist, und wobei der wenigstens eine Warmölausleiter wenigstens einen Damm und wenigstens eine Öleinspritzeinrichtung aufweist, durch die Öl auf eine in dem Kippsegmentlager gelagerte Welle spritzbar ist. Die Erfindung betrifft zudem einen Warmölausleiter für ein solches Kippsegmentlager.

Ein derartiges Kippsegmentlager ist aus der JP 2010-151283 bekannt, das die Merkmale des Oberbegriffs von Anspruch 1 offenbart.

Derartige Lager sind aus dem Stand der Technik seit langem bekannt. Sie weisen wenigstens zwei in Umfangsrichtung voneinander beabstandete Kippsegmente auf, die jeweils einer Lagerfläche aufweisen. Diese Kippsegmente sind zumeist einzeln mit einem Öl geschmiert. Dieses Öl bildet einen Film, der sich im Schmierspalt zwischen der Lagerfläche eines jeden der Kippsegmente und der zu lagernden Welle befindet. Aufgrund der Rotation der Welle wird das Öl durch diesen Schmierspalt hindurch gefördert. Dadurch wird es erwärmt, sodass es den Schmierspalt wärmer verlässt als es in ihn eingetreten ist.

Ein Kippsegmentlager ist in der Regel für eine bestimmte Umlaufrichtung der Welle vorgesehen. Es sind jedoch auch Kippsegmentlager bekannt, die für beidseitige Umlaufrichtungen der Welle verwendet werden können. Die vorliegende Erfindung kann bei beiden Versionen eines Kippsegmentlagers verwendet werden. Jedes der Kippsegmente weist eine vordere und eine hintere Kante auf, die auch als vorlaufende Kante und nachlaufende Kante bezeichnet werden. Dabei ist die vordere oder vorlaufbekannte die Kante, die von einem Punkt auf der sich drehenden Welle zuerst überstrichen wird, während die hintere oder nachlaufende Kante die Kante des Kippsegmentes ist, die von einem Punkt auf der Welle als letztes überlaufen wird.

Kippsegmentlager sind beispielsweise aus der US 5,738,447 A und der US 5,879,085 A bekannt.

Aus der US 4,497,587 ist bekannt, Schmieröl in einem separaten Bauteil zuzuführen, das zwischen zwei benachbarten Kippsegmenten angeordnet ist. Dieses Bauteil weist in Umlaufrichtung der Welle vorn einen Damm auf, durch den sich an der Welle befindliches Öl am Eindringen in den nächsten Schmierspalt des sich anschließenden Kippsegmentes gehindert werden soll. Eine ähnliche Ausgestaltung ist aus der US 5,738,447 bekannt. Beide Bauteile verfügen über einen Damm, durch den sich an der Welle befindendes Öl am Eindringen in den jeweils nächsten Schmierspalt des sich anschließenden Kippsegmentes gehindert werden soll. In Umlaufrichtung hinter diesem Damm befindet sich eine Öleinspritzeinrichtung, durch die frisches und insbesondere kühles Öl in den jeweiligen Schmierspalt eingespritzt wird. Aus der US 5,288,153 ist ein Kippsegmentlager bekannt, bei dem ebenfalls zwischen benachbarten Kippsegmenten ein zusätzliches separates Bauteil angeordnet ist. Dieses verfügt jedoch nicht über einen Damm, um anhaftendes Öl zu entfernen, sondern eine Mehrzahl von Öleinspritzdüsen, durch die frisches Öl unter einem hohen Druck auf die zu lagernden Welle gesprüht wird. Dadurch soll ein an der Welle anhaftende Ölfilm abgelöst werden.

Aus der DE 10 2011 105 762 A1 ist ebenfalls ein Kippsegmentlager bekannt, bei dem zwischen benachbarten Kippsegmenten eine Öleinspritzeinrichtung angeordnet ist. Diese verfügt über eine speziell ausgestaltete Oberflächenform und Kontur, um den Effekt zu optimieren. Dieses Bauteil wird in der Regel Warmölausleiter genannt.

Nachteilig ist, dass der Abstand zwischen einem Damm des Warmölausleiters und der zu lagernden Welle relativ groß gewählt werden muss, um auch bei Bewegungen der Welle relativ zum Kippsegmentlager und sich bewegenden Kippsegmenten gewährleisten zu können, dass der Damm des Warmölausleiters nicht direkt mit der zu lagernden Welle in Kontakt kommt. Es muss folglich ein Sicherheitsabstand gewählt werden, der oftmals deutlich größer ist als die Ölfilmdicke des sich einstellenden Schmierspaltes zwischen der Welle und der Lagerfläche der einzelnen Kippsegmente. Daher kann nur ein Teil des an der Welle anhaftenden warmen Öls abgeleitet werden.

Der Erfindung liegt daher die Aufgabe zugrunde, ein Kippsegmentlager so weiterzuentwickeln, dass mehr an einer Welle anhaftendes Öl ausgeleitet werden kann.

Die Erfindung löst die gestellte Aufgabe durch ein Kippsegmentlager gemäß dem Oberbegriff des Anspruchs 1, das sich dadurch auszeichnet, dass das wenigstens eine Kraftaufbringelement wenigstens ein hydraulisches Element aufweist, wobei das aufzuspritzende Öl als Hydraulikflüssigkeit verwendet wird.. Der Warmölausleiter wird auf diese Weise von äußeren Einflüssen und Kräften, insbesondere den hydraulischen Kräften und Eigenschaften des ihn umgebenden und umschließenden Öls in eine Position gebracht, die eine bessere Abstreif-Wirkung erreicht. Die Bewegbarkeit des Warmölausleiters in Richtung auf die Welle zu und von der Welle weg bedeutet, dass der Warmölausleiter zumindest über einen bestimmten Bereich auf die Welle zu und von der Welle wegbewegt werden kann. Diese Bewegung kann in wenigstens einer der beiden Richtungen, bevorzugt jedoch in beiden Richtungen durch einen Anschlag, beispielsweise einen mechanischen Anschlag, begrenzt sein. Liegt der Warmölausleiter an einem dieser Anschläge an, ist eine Bewegung selbstverständlich nur noch in eine der beiden Richtungen, also entweder auf die Welle zu oder von der Welle weg, möglich. Diese Ausgestaltung wird durch die hier verwendete Formulierung abgedeckt.

Vorzugsweise handelt es sich bei dem Kippsegmentlager um ein Axiallager und der wenigstens eine Warmölausleiter ist in axialer Richtung bewegbar. Kann in dieser Ausgestaltung vorzugsweise auf eine Stirnfläche oder eine axiale Lagerfläche der Welle zu und von dieser wegbewegt werden. Alternativ dazu handelt es sich bei dem Kippsegmentlager um ein Radiallager und der wenigstens eine Warmölausleiter ist in radialer Richtung bewegbar.

Vorteilhafte Lageranordnungen verfügen über wenigstens ein hier beschriebenes Kippsegmentlager, das als Radiallager ausgebildet ist, und wenigstens ein hier beschriebenes Kippsegmentlager, das als Axiallager ausgebildet ist. Jedes dieser Kippsegmentlager verfügt folglich über wenigstens einen Warmölausleiter, wobei der wenigstens eine Warmölausleiter des Radiallagers in radialer Richtung und der wenigstens eine Warmölausleiter des axialen Lagers in axialer Richtung bewegbar ist.

Erfindungsgemäß weist das Kippsegmentlager wenigstens ein Kraftaufbringelement auf, durch das eine in Richtung auf die Welle wirkende Kraft auf den wenigstens einen Warmölausleiter ausübbar ist. Diese Kraft drückt den Warmölausleiter folglich auf die zu lagernden Welle zu. Es stellt sich ein Kräftegleichgewicht zwischen dieser durch das Kraftaufbringelement ausgeübten Kraft und der sich aufgrund der hydraulischen Eigenschaften einstellenden in die entgegengesetzte Richtung wirkenden Kraft, die hier als Hydraulikkraft bezeichnet werden soll. Durch die Rotation der Welle und den mit ihr rotierenden Schmierfilm, der an der Welle haftet, und das durch den Schmierspalt bewegte Öl wird eine von der Welle weg wirkende Hydraulikkraft auf den wenigstens einen Warmölausleiter ausgeübt. Diese Hydraulikkraft ist umso größer, je näher sich der Warmölausleiter an der Welle befindet.

Auf diese Weise kann der Abstand zwischen der der Welle zugewandten Fläche des Warmölausleiters und der gelagerten Welle gegenüber den Ausführungen aus dem Stand der Technik reduziert werden, sodass mehr Öl von der sich drehenden Welle abgestreift und aus dem Kippsegmentlager ausgeleitet werden kann. Dadurch wird zudem Wärme aus dem Kippsegmentlager abgeführt, sodass bei ansonsten gleicher Ausgestaltung des Kippsegmentlagers höhere Rotationsgeschwindigkeiten der Welle und/oder höhere Belastungen ermöglicht werden.

In einer bevorzugten Ausgestaltung verfügt das Kippsegmentlager über wenigstens zwei Kraftaufbringelemente, durch die die Kraft auf den Warmölausleiter ausübbar ist. Dadurch kann die Kraft gleichmäßiger aufgebracht werden und es werden Kippbewegungen, Querbeschleunigungen oder Verkantungen vermieden. Die wenigstens zwei Kraftaufbringelemente sind bei Radiallager bevorzugt in axialer Richtung und bei Axiallagern bevorzugt in radialer Richtung nebeneinander angeordnet, sodass an mehreren Stellen des Warmölausleiters die Kraft aufgebracht wird.

Bevorzugt verfügt das wenigstens eine Kraftaufbringelement über wenigstens ein mechanisches Element, insbesondere eine Feder, besonders bevorzugt eine Druckfeder. Vorzugsweise verfügt das wenigstens eine Kraftaufbringelement über mehrere mechanische Elemente, die, wie bereits dargelegt, in axialer Richtung nebeneinander angeordnet sind, sodass an mehreren axial voneinander beabstandeten Stellen eine Kraft auf den Warmölausleiter aufgebracht werden kann. Verfügt das wenigstens eine Kraftaufbringelement über wenigstens ein hydraulisches Element, ist es auch besonders einfache Weise möglich, die Kraft auf den Warmölausleiter aufzubringen und einzustellen. Dabei kann das ohnehin aufzubringende Öl, durch das das Kippsegmentlager geschmiert wird, als Hydraulikflüssigkeit verwendet werden. Soll der Abstand zwischen dem Warmölausleiter und der zu lagernden Welle während des Betriebes reduziert werden, kann einfach die Druckkraft des Öls, das gleichzeitig die Schmierflüssigkeit bildet, bevorzugt durch eine Anpassung des Designs, also insbesondere der geometrischen Formen und Konturen, erhöht werden. Dadurch wird das Kräftegleichgewicht mit der in die entgegengesetzte Richtung wirkenden Hydraulikkraft zu einer weiter auf die Welle zu verschobenen Position des Warmölausleiters verschoben.

Bevorzugt befindet sich zwischen jeden benachbarten Kippsegmenten wenigstens ein Warmölausleiter, wobei das Kippsegmentlager wenigstens so viele Kraftaufbringelemente wie Warmölausleiter aufweist, durch die auf jeden Warmölausleiter eine nach radial innen wirkende Kraft ausübbar ist. Vorzugsweise sind für jeden Warmölausleiter gleiche Anzahl von Kraftaufbringelementen vorhanden. Sind die verschiedenen Kippsegmente äquidistant über den Umfang verteilt, lässt sich auf diese Weise besonders einfach erreichen, dass dies auch für die Warmölausleiter gilt. Dabei befindet sich bevorzugt der Warmölausleiter nicht zentral in der Mitte zwischen den beiden benachbarten Kippsegmenten, sondern er ist zu dem nachlaufenden Kippsegment verschoben. Dies bedeutet, dass sich in Umlaufrichtung vor dem Warmölausleiter ein größerer Zwischenraum befindet als in Umlaufrichtung hinter dem Warmölausleiter, sodass das vom Warmölausleiter abgestreifte Öl an dieser Stelle besonders einfach das Kippsegmentlager bei Axiallagern bevorzugt in axialer Richtung und bei Radiallagern bevorzugt in radialer Richtung verlassen kann. Durch die äquidistante Anordnung der verschiedenen Warmölausleiter wird erreicht, dass an möglichst vielen Stellen warmes Öl aus dem Kippsegmentlager entfernt werden kann, sodass sich eine möglichst homogene Öltemperatur über den gesamten Umfang einstellt.

Vorzugsweise ist der wenigstens eine Warmölausleiter entlang einer Führung bewegbar, wobei die Führung bei Radiallagern bevorzugt eine Bewegung des Warmölausleiters in axialer Richtung und bei Axiallagern bevorzugt eine Bewegung des Warmölausleiters in radialer verhindert. Besonders bevorzugt wird durch die Führung eine Bewegung des wenigstens einen Warmölausleiters in Umfangsrichtung nicht verhindert. Für bestimmte Anwendungen kann es jedoch auch von Vorteil sein, durch die Führung auch eine Bewegung in Umfangsrichtung zu verhindern. Durch die Führung wird verhindert, dass der Warmölausleiter Kräften ausweicht, die nicht exakt in Richtung auf die Welle oder von der Welle weg wirken. Zudem kann durch einen Anschlag eine maximale Verschiebung des Warmölausleiters auf die Welle zu begrenzt werden, um auf diese Weise sicherzustellen, dass ein direkter Kontakt zwischen dem Warmölausleiter und der zu lagernden Welle vermieden wird.

In einer bevorzugten Ausgestaltung ist der wenigstens eine Warmölausleiter um eine Schwenkachse schwenkbar gelagert, die sich parallel zu der Längsachse der Welle erstreckt. Im Betrieb des Kippsegmentlagers wird beispielsweise eine rotierende Welle radial gelagert. Durch die Bewegung und den dabei auftretenden Ölfluss werden die einzelnen Kippsegmente in die für die jeweilige Bewegungs- und Lagersituation passende Lage gekippt. Eine aktive Steuerung ist dafür nicht nötig. Durch die entsprechende Lagerung des wenigstens einen Warmölausleiters ist auch der Warmölausleiter um eine Schwenkachse schwenkbar, die parallel zur Längsachse der Welle und vorzugsweise auch parallel zu einer Achse verläuft, um die die Kippsegmente kippbar sind. Auch das Verschwenken oder Verkippen des Warmölausleiters erfolgt in diesem Fall durch die herrschenden Kräfte, ohne dass es einer aktiven Steuerung oder Bewegung bedarf.

Erfindungsgemäß verfügt der wenigstens eine Warmölausleiter über wenigstens einen Damm und wenigstens eine Öleinspritzeinrichtung, durch die Öl auf eine in dem Kippsegmentlager gelagerte Welle spritzbar ist. Der Damm bildet vorzugsweise den am weitesten nach radial innen vorspringenden Teil des Warmölausleiters. Er ist folglich der Teil, der der zu lagernden Welle am nächsten kommt. Zwischen ihm und der Welle befindet sich der Schmierspalt, der sich zwischen dem Warmölausleiter der Welle einstellt. In Umlaufrichtung dahinter befindet sich die Öleinspritzeinrichtung, durch die frisches Öl eingespritzt wird. Durch ihre Position im "Windschatten" des Damms kann das frische und insbesondere kühle Öl besonders einfach eingespritzt werden, wonach es sofort durch die rotierende Welle mitgerissen und in den folgenden Schmierspalt eingebracht wird. Aus dem Stand der Technik sind unterschiedliche Formen und Positionierungen eines Damms bekannt. Besonders vorteilhaft verfügt der Damm über eine vorlaufende Spitze oder einen vorlaufenden Teil, der sich bevorzugt in axialer Richtung mittig an dem Warmölausleiter befindet. Daran schließt sich in beide axialen Richtungen ein Teil des Damms an, der immer weiter nachläuft. Dadurch wird von der Welle abgestreiftes Öl gleichzeitig nach axial außen befördert, wo es das Kippsegmentlager verlassen kann.

In einer bevorzugten Ausgestaltung verfügt der wenigstens eine Warmölausleiter über wenigstens zwei Öleinspritzeinrichtungen, die auf verschiedenen Seiten des wenigstens einen Damms angeordnet sind. Auf diese Weise ist der Warmölausleiter nicht auf eine Rotationsrichtung der gelagerten Welle beschränkt, sondern kann unabhängig von der Richtung verwendet werden, sodass sich immer eine der Öleinspritzeinrichtungen in Umlaufrichtung hinter dem Damm befindet. Bevorzugt verfügt der wenigstens eine Warmölausleiter über eine Öleinspritzeinrichtung, die sich in der Mitte des Damms befindet. Auch dadurch wird ein Warmölausleiter erreicht, der unabhängig von der Rotationsrichtung der gelagerten Welle verwendbar ist.

Vorzugsweise verfügt der wenigstens eine Warmölausleiter über wenigstens zwei Dämme, die in Umfangsrichtung voneinander beabstandet sind. Einer der Dämme ist folglich näher an der vorlaufenden Kante und einer näher an der nachlaufenden Kante des Warmölausleiters angeordnet. Dazwischen befindet sich bevorzugt die wenigstens eine Öleinspritzeinrichtung. Auf diese Weise ist die Öleinspritzeinrichtung zwischen den beiden Dämmen angeordnet, so dass der Warmölausleiter unabhängig von der Rotationsrichtung der Welle, die gelagert werden soll, verwendet werden kann.

Die Erfindung löst die gestellte Aufgabe zudem durch einen Warmölausleiter für ein hier beschriebenes Kippsegmentlager.

Mithilfe der beigefügten Zeichnungen werden nachfolgend einige Ausführungsbeispiele der vorliegenden Erfindung näher erläutert. Es zeigen
- Figur 1 -: eine Schnittdarstellung durch ein Kippsegmentlager gemäß einem ersten Ausführungsbeispiel der vorliegenden Erfindung,
- Figur 2 -: einen vergrößerten Ausschnitt aus Figur 1,
- Figur 3 -: eine Schnittdarstellung durch ein Kippsegmentlager gemäß einem zweiten Ausführungsbeispiel der vorliegenden Erfindung,
- Figur 4 -: einen vergrößerten Ausschnitt aus Figur 3,
- Figuren 5 bis 10 -: verschiedene Ausführungsformen eines Warmölausleiters.

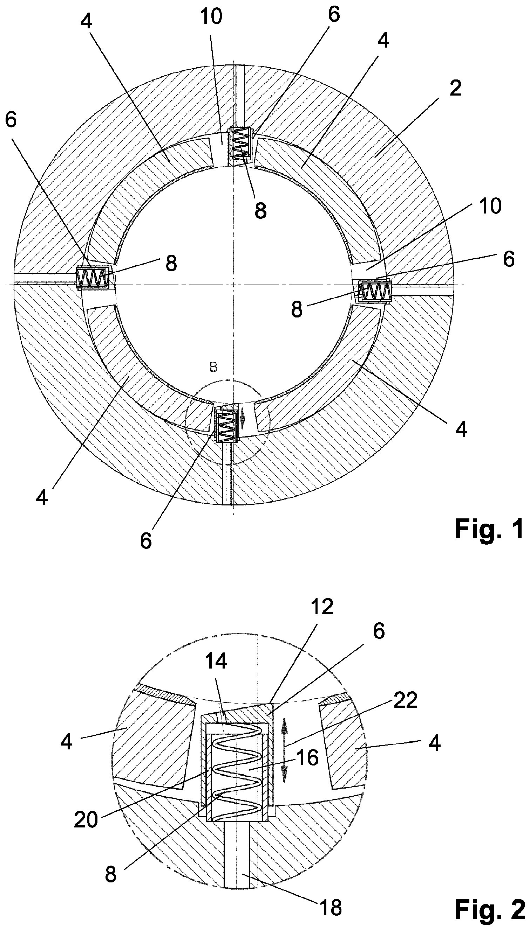

Figur 1 zeigt eine Schnittdarstellung durch ein Kippsegmentlager gemäß einem ersten Ausführungsbeispiel der vorliegenden Erfindung. Es verfügt über ein Lagergehäuse 2, an dem vier Kippsegmente 4 angeordnet sind. Das Kippsegmentlager ist im gezeigten Ausführungsbeispiel ein Radiallager. Zwischen jeweils zwei der Kippsegmente 4 befindet sich jeweils ein Warmölausleiter 6, der im gezeigten Ausführungsbeispiel durch eine Feder 8, die im gezeigten Ausführungsbeispiel eine Kraftaufbringelement bildet, nach radial innen, also in Richtung auf die aus Übersichtlichkeitsgründen nicht dargestellte Welle hin, verschoben werden kann. Man erkennt, dass sich der jeweilige Warmölausleiter 6 nicht in der Mitte zwischen den beiden benachbarten Kippsegmente 4 befindet. Vielmehr befindet sich im Uhrzeigersinn vor dem jeweiligen Warmölausleiter 6 ein größerer Zwischenraum 10 als im Uhrzeigersinn hinter dem Warmölausleiter 6. Das in den Figuren 1 und 2 gezeigte Kippsegmentlager ist für eine sich im Uhrzeigersinn drehende Welle vorgesehen.

Figur 2 zeigt einen vergrößerten Ausschnitt aus Figur 1. Man erkennt den Warmölausleiter 6 mit der sich darin befindenden Feder 8, der zwischen den benachbarten Kippsegmenten 4 angeordnet ist. Der Warmölausleiter 6 verfügt über einen Damm 12, der im gezeigten Ausführungsbeispiel die vorlaufende Kante bildet. Der Damm 12 ist der Teil des Warmölausleiters 6, der beim gezeigten Radiallager am weitesten nach radial innen, also auf die zu lagernden Welle zu, vorsteht. Ist das Kippsegmentlager als Axiallager ausgebildet, steht der Damm 12 in axialer Richtung vor und bildet so den Teil des Warmölausleiters 6, der der zu lagernden Welle am nächsten kommt.

Dem Damm 12 nachlaufend verfügt der Warmölausleiter 6 über eine Öleinspritzeinrichtung 14, die im gezeigten Ausführungsbeispiel mit einem Innenraum 16 des Warmölausleiters 6 und über diesen mit einer Ölzuführleitung 18 verbunden ist. Der gezeigte Warmölausleiter 6 ist entlang einer Führung 20 in den durch den Doppelpfeil 22 angegebenen Richtungen verschiebbar.

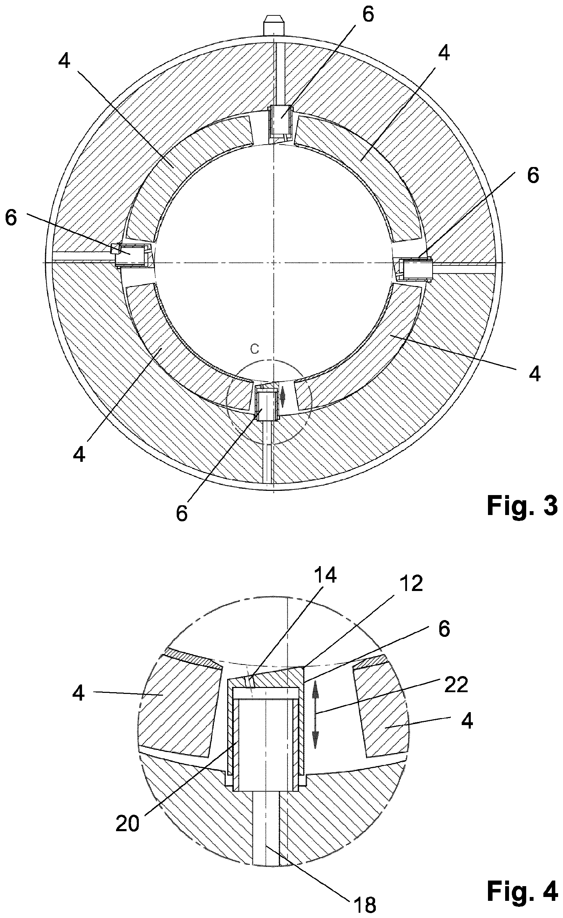

Figur 3 zeigt eine Schnittdarstellung durch ein Kippsegmentlager ähnlich der Figur 1. Auch dieses Lager verfügt über vier Kippsegmente 4 zwischen denen sich jeweils ein Warmölausleiter 6 befindet, der nun jedoch nicht durch ein mechanisches Kraftaufbringelement, also beispielsweise die Feder 8, sondern hydraulisch mit einer Kraft beaufschlagbar ist.

Figur 4 zeigt einen vergrößerten Ausschnitt. Zwischen den beiden Kippsegmenten 4 befindet sich der Warmölausleiter 6, der entlang der Führung 20 in den durch den Doppelpfeil 22 gezeigten Richtungen verschiebbar ist. Der Warmölausleiter 6 verfügt über den Damm 12, der wieder die vorlaufende Kante bildet. Nachlaufend zu dieser Kante ist die Öleinspritzeinrichtung 14 gezeigt. Über die Ölzuführleitung 18 wird der Warmölausleiter 6 mit dem benötigten Öl versorgt, dass nun auch als Hydraulikflüssigkeit die Kraft auf den Warmölausleiter 6 aufbringt.

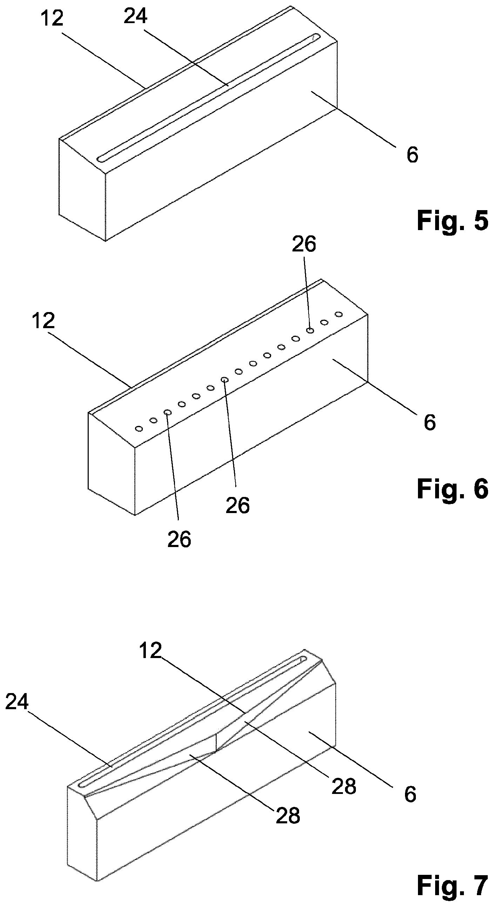

Die Figuren 5 bis 7 zeigen schematisch einen Warmölausleiter 6. Er verfügt jeweils über einen Damm 12, der sich in den Figuren 5 und 6 am hinteren Ende des gezeigten Warmölausleiters 6 befindet. Der in Figur 5 gezeigte Warmölausleiter 6 verfügt über einen Schlitz 24, der als Öleinspritzeinrichtung 14 dient. Im Gegensatz dazu zeigt der in Figur 6 gezeigte Warmölausleiter 6 eine Reihe von Bohrungen 26, die die Öleinspritzeinrichtung 14 bilden.

Figur 7 zeigt eine andere Form des Warmölausleiters 6. Auch er verfügt über den Schlitz 24, der sich in Figur 7 jedoch am hinteren Ende des Warmölausleiters 6 befindet. Der Damm 12 ist vorne angeordnet und verfügt über zwei Flanken 28, durch die er eine v-Form erhält. Öl, das von einer zu lagernden Welle durch diesen Damm 12 abgestreift wird, wird auf diese Weise in axialer Richtung bewegt und kann das Kippsegmentlager in dieser Richtung einfach verlassen.

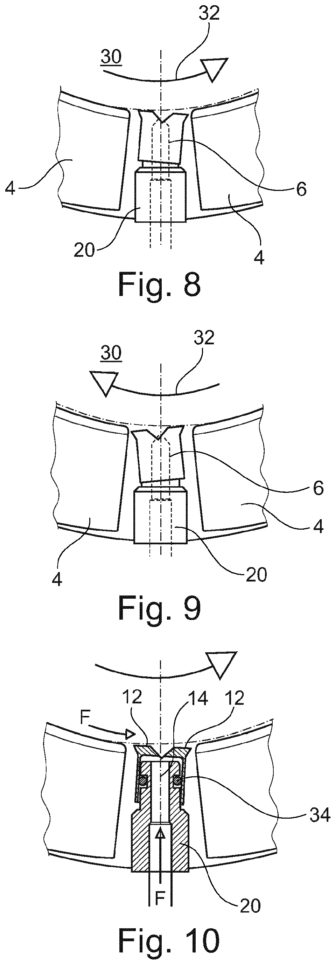

Figuren 8 und 9 zeigen jeweils eine schematische Seitenansicht eines Warmölausleiters 6, der zwischen zwei Kippsegmenten 4 ist. Eine zu lagernde Welle 30 ist schematisch oberhalb der Kippsegmente 4 dargestellt. Die jeweilige Drehrichtung wird durch den Pfeil 32 dargestellt. Der eigentliche Warmölausträger 6 ist auf einer Führung 20 verschieblich gelagert, wie dies bei den in den Figuren 5 bis 7 dargestellten Ausführungsformen ebenfalls der Fall ist. Zusätzlich ist der Warmölausleiter 6 um eine Achse kippbar, die in den Figuren 8 und 9 senkrecht aus der Zeichenebene steht. Man erkennt in Figur 8, dass der Warmölausleiter 6 nach rechts gekippt ist. Dies wird im Wesentlichen durch die sich entgegen dem Uhrzeigersinn drehenden Welle 30 und den dadurch hervorgerufenen Ölfluss erreicht. In Figur 9 hingegen ist der Warmölausträger nach links gekippt dargestellt, da sich die Welle 30 im Uhrzeigersinn dreht.

Figur 10 zeigt eine schematische Schnittdarstellung durch den Warmölausträger 6, wie er in Figur 8 dargestellt ist. An der Führung 20, auf der der Warmölausleiter 6 angeordnet ist, befindet sich ein Dichtring 34, der mit einer Innenseite des Warmölausleiters 6 in Kontakt kommt. Er steht im gezeigten Ausführungsbeispiel über die Führung 20 hinaus und bildet bei einem nicht gekippten Warmölausleiter 6 vorzugsweise die einzige Kontaktstelle zum Warmölausleiter. Dadurch wird die Kippung ermöglicht. Sie ist begrenzt bis zu der Position, in der der untere Rand des Warmölausleiters mit der Führung 20 in Kontakt kommt.

An der der Welle 30 zugewandten Seite verfügt der Warmölausleiter über zwei voneinander beabstandete Dämme 12, zwischen denen sich eine Öleinspritzeinrichtung befindet. Der Warmölausleiter 6 ist für beide Rotationsrichtungen, die in den Figuren 8 und 9 dargestellt sind, verwendbar. Er ist zwei unterschiedlichen Kräften unterworfen, die in Figur 10 durch jeweils ein "F" gekennzeichnet sind. Die von unten, also radial, wirkende Kraft durch das Federelement oder den hydraulischen Druck des Öls, und die in Umfangsrichtung wirkende Kraft durch die Rotation der Welle 30 und den dadurch hervorgerufenen Ölfluss.

### Bezugszeichenliste

- 2: Lagergehäuse
- 4: Kippsegment
- 6: Warmölausleiter
- 8: Feder
- 10: Zwischenraum
- 12: Damm
- 14: Öleinspritzeinrichtung
- 16: Innenraum
- 18: Ölzuführleitung
- 20: Führung
- 22: Doppelpfeil
- 24: Schlitz
- 26: Bohrung
- 28: Flanke
- 30: Welle
- 32: Pfeil
- 34: Dichtring

## Patentansprüche

1. Kippsegmentlager zum Lagern einer Welle (30) mit einer Längsachse, wobei das Kippsegmentlager
- wenigstens zwei voneinander beabstandete Kippsegmente (4) mit jeweils einer Lagerfläche und
- wenigstens einen Warmölausleiter (6) aufweist, der
in einem Zwischenraum zwischen den wenigstens zwei Kippsegmenten (4) angeordnet ist,
wobei der wenigstens eine Warmölausleiter (6) in Richtung auf die Welle zu und von der Welle weg bewegbar gelagert ist, wobei das Kippsegmentlager wenigstens ein Kraftaufbringelement aufweist, durch das eine nach radial innen wirkende Kraft auf den wenigstens einen Warmölausleiter (6) ausübbar ist, und wobei der wenigstens eine Warmölausleiter (6) wenigstens einen Damm (12) und wenigstens eine Öleinspritzeinrichtung (14) aufweist, durch die Öl auf eine in dem Kippsegmentlager (4) gelagerte Welle spritzbar ist, **dadurch gekennzeichnet, dass** das wenigstens eine Kraftaufbringelement wenigstens ein hydraulisches Element aufweist, wobei das aufzubringende Öl als Hydraulikflüssigkeit verwendet wird.

2. Kippsegmentlager nach Anspruch 1, **dadurch gekennzeichnet, dass** das Kippsegmentlager ein Axiallager und der wenigstens eine Warmölausleiter in axialer Richtung bewegbar ist oder dass das Kippsegmentlager ein Radiallager und der wenigstens eine Warmölausleiter in radialer Richtung bewegbar ist.

3. Kippsegmentlager nach Anspruch 1 oder 2, **dadurch gekennzeichnet**, das Kippsegmentlager wenigstens zwei Kraftaufbringelemente aufweist, durch die die Kraft auf einen Warmölausleiter ausübbar ist.

4. Kippsegmentlager nach einem der vorstehenden Ansprüche, **dadurch gekennzeichnet, dass** das wenigstens eine Kraftaufbringelement wenigstens ein mechanisches Element, insbesondere eine Feder, bevorzugt eine Druckfeder aufweist.

5. Kippsegmentlager nach einem der vorstehenden Ansprüche, **dadurch gekennzeichnet, dass** zwischen jeden zwei benachbarten Kippsegmente wenigstens ein Warmölausleiter angeordnet ist und das Kippsegmentlager wenigstens so viele Kraftaufbringelemente wie Warmölausleiter aufweist, durch die auf jeden Warmölausleiter eine nach radial innen wirkende Kraft ausübbar ist.

6. Kippsegmentlager nach einem der vorstehenden Ansprüche, **dadurch gekennzeichnet, dass** der wenigstens eine Warmölausleiter entlang einer Führung bewegbar ist, wobei die Führung vorzugsweise eine Bewegung des Warmölausleiters in axialer Richtung und/oder in Umfangsrichtung verhindert.

7. Kippsegmentlager nach einem der vorstehenden Ansprüche, **dadurch gekennzeichnet, dass** der wenigstens eine Warmölausleiter um eine Schwenkachse schwenkbar angeordnet ist, die sich parallel zu der Längsachse der Welle erstreckt.

8. Kippsegmentlager nach einem der vorstehenden Ansprüche, **dadurch gekennzeichnet, dass** der Warmölausleiter wenigstens zwei in Umfangsrichtung der Welle voneinander beabstandete Dämme aufweist, zwischen denen sich die Öleinspritzeinrichtung befindet.

9. Kippsegmentlager nach einem der vorstehenden Ansprüche, **dadurch gekennzeichnet, dass** der wenigstens eine Warmölausleiter wenigstens zwei Öleinspritzeinrichtungen aufweist, die auf verschiedenen Seiten des wenigstens einen Damms angeordnet sind.

10. Warmölausleiter für ein Kippsegmentlager nach einem der vorstehenden Ansprüche.

## Claims

1. A tilting pad bearing for supporting a shaft (30) with a longitudinal axis, the tilting pad bearing comprising
- at least two tilting pads (4) spaced apart from each other, each of which has a bearing surface and
- at least one hot oil drainer (6) which is arranged in an intermediate space between the at least two tilting pads (4),
wherein the at least one hot oil drainer (6) is mounted such that it can be moved towards and away from the shaft, wherein the tilting pad bearing has at least one force application element, by means of which a force acting radially inwards can be exerted on the at least one hot oil drainer (6), and wherein the at least one hot oil drainer (6) has at least one dam (12) and at least one oil injection device (14) by means of which oil can be sprayed onto a shaft supported in the tilting pad bearing (4),
**characterized in that** the at least one force application element has at least one hydraulic element, wherein the oil to be applied is used as a hydraulic fluid.

2. The tilting pad bearing according to claim 1, **characterized in that** the tilting pad bearing is an axial bearing and the at least one hot oil drainer can be moved in the axial direction or that the tilting pad bearing is a radial bearing and the at least one hot oil drainer can be moved in the radial direction.

3. The tilting pad bearing according to claim 1 or 2, **characterized in that** the tilting pad bearing has at least two force application elements, by means of which the force can be exerted on a hot oil drainer.

4. The tilting pad bearing according to one of the preceding claims, **characterized in that** the at least one force application element features at least one mechanical element, especially a spring, especially preferably a compression spring.

5. The tilting pad bearing according to one of the preceding claims, **characterized in that** there is at least one hot oil drainer between each adjacent tilting pad element and the tilting pad bearing comprises at least as many force application elements as hot oil drainers, by means of which a force acting radially inwards can be exerted on each hot oil drainer.

6. The tilting pad bearing according to one of the preceding claims, **characterized in that** the at least one hot oil drainer can be moved along a guide, wherein the guide preferably prevents a movement of the hot oil drainer in the axial direction and/or in the circumferential direction.

7. The tilting pad bearing according to one of the preceding claims, **characterized in that** the at least one hot oil drainer is arranged such that it can be swivelled about a swivel axis that extends parallel to the longitudinal axis of the shaft.

8. The tilting pad bearing according to one of the preceding claims, **characterized in that** the hot oil drainer comprises at least two dams that are spaced apart from each other in the circumferential direction of the shaft, between which the oil injection device is located.

9. The tilting pad bearing according to one of the preceding claims, **characterized in that** the at least one hot oil drainer features at least two oil injection devices that are arranged on different sides of the at least one dam.

10. A hot oil drainer for a tilting pad bearing according to one of the preceding claims.

## Revendications

1. Palier à segments oscillants pour monter un arbre (30) ayant un axe longitudinal, le palier à segments oscillants comprenant
- au moins deux segments oscillants (4) espacés l'un de l'autre, qui présentent chacun une surface de palier, et
- au moins un organe d'évacuation d'huile chaude (6) qui est agencé dans un intervalle entre lesdits au moins deux segments oscillants (4), ledit au moins un organe d'évacuation d'huile chaude (6) étant monté de manière à pouvoir se déplacer en direction de l'arbre et en éloignement de l'arbre, le palier à segments oscillants comprenant au moins un élément d'application de force permettant d'exercer une force, agissant radialement vers l'intérieur, sur ledit au moins un organe d'évacuation d'huile chaude (6), et ledit au moins un organe d'évacuation d'huile chaude (6) comprenant au moins un barrage (12) et au moins un organe d'injection d'huile (14) permettant de projeter de l'huile sur un arbre monté dans le palier à segments oscillants (4),
**caractérisé en ce que** ledit au moins un élément d'application de force comprend au moins un élément hydraulique, l'huile à appliquer étant utilisée comme liquide hydraulique.

2. Palier à segments oscillants selon la revendication 1,
**caractérisé en ce que** le palier à segments oscillants est un palier axial et ledit au moins un organe d'évacuation d'huile chaude est susceptible d'être déplacé dans la direction axiale, ou **en ce que** le palier à segments oscillants est un palier radial et ledit au moins un organe d'évacuation d'huile chaude est susceptible d'être déplacé dans la direction radiale.

3. Palier à segments oscillants selon la revendication 1 ou 2,
**caractérisé en ce que** le palier à segments oscillants comprend au moins deux éléments d'application de force permettant d'exercer la force sur un organe d'évacuation d'huile chaude.

4. Palier à segments oscillants selon l'une des revendications précédentes, **caractérisé en ce que** ledit au moins un élément d'application de force comprend au moins un élément mécanique, en particulier un ressort, de préférence un ressort de compression.

5. Palier à segments oscillants selon l'une des revendications précédentes, **caractérisé en ce qu'**au moins un organe d'évacuation d'huile chaude est disposé entre deux segments oscillants voisins respectifs, et le palier à segments oscillants comprend au moins autant d'éléments d'application de force que d'organes d'évacuation d'huile chaude, qui permettent d'exercer une force, agissant radialement vers l'intérieur, sur chaque organe d'évacuation d'huile chaude.

6. Palier à segments oscillants selon l'une des revendications précédentes, **caractérisé en ce que** ledit au moins un organe d'évacuation d'huile chaude est susceptible d'être déplacé le long d'un guidage, le guidage empêchant de préférence un mouvement de l'organe d'évacuation d'huile chaude dans la direction axiale et/ou dans la direction circonférentielle.

7. Palier à segments oscillants selon l'une des revendications précédentes, **caractérisé en ce que** ledit au moins un organe d'évacuation d'huile chaude est disposé de manière à pouvoir pivoter autour d'un axe de pivotement qui s'étend parallèlement à l'axe longitudinal de l'arbre.

8. Palier à segments oscillants selon l'une des revendications précédentes, **caractérisé en ce que** ledit au moins un organe d'évacuation chaude comprend au moins deux barrages espacés l'un de l'autre dans la direction circonférentielle de l'arbre, entre lesquels se trouve l'organe d'injection d'huile.

9. Palier à segments oscillants selon l'une des revendications précédentes, **caractérisé en ce que** ledit au moins un organe d'évacuation d'huile chaude comprend au moins deux organes d'injection d'huile disposés sur différents côtés dudit au moins un barrage.

10. Organe d'évacuation d'huile chaude pour un palier à segments oscillants selon l'une des revendications précédentes.
